# DEMANDE DE BREVET EUROPEEN

(11) **EP 2 952 728 A1**
(43) Date de publication de la demande: **09.12.2015**
(21) Numéro de dépôt: 14171314.9
(22) Date de dépôt: 05.06.2014
(51) Int. Cl.: F02M 21/02, F02B 63/06, F02B 63/04

(54) **Système moteur à explosion alimente en gaz et appareil comportant un tel système tel qu'un groupe électrogène ou une motopompe**

(71) Demandeur: Klever Energy Europe, 64110 Laroin (FR)
(72) Inventeur: Kaczmarek, Dominique M., 64110 Laroin (FR)
(74) Mandataire: Wagret, Frédéric

(57) **Abrégé**

L'invention concerne un système moteur à explosion (100) à fonctionnent autonome alimenté en gaz. Selon l'invention, le système moteur comprend un moteur à explosion (120) muni d'une chambre de combustion (11); une bouteille de gaz (20) et un détendeur (21) qui fournit le gaz à une pression P1 ainsi qu'une interface de raccordement (150) entre le détendeur (21) et la chambre de combustion (11) du moteur, cette interface comportant un dispositif d'injection (10) muni d'un moyen de réglage (103) de la pression pour le maintien à la pression P1; un tuyau de raccordement (30) pour relier le détendeur (21) au dispositif d'injection (10) et un tuyau de raccordement (31) pour relier le dispositif d'injection (10) à la chambre de combustion (11), ledit tuyau (31) étant apte à détendre le gaz de la pression P1 à une pression P2 requise à l'entrée de la chambre de combustion (11) du moteur via une vis de laminage (104).

## Description

L'invention concerne un système moteur à explosion autonome à alimentation en gaz propane ou butane ou méthane ou biogaz, et appareils ou machines à autonomie de fonctionnement comprenant un tel système.

L'invention concerne également les applications de ce système moteur telles que les appareils générateurs de courant comme les groupes électrogènes ou toutes autres applications nécessitant un entraînement mécanique autonome comme par exemple une motopompe et autre machine à autonomie de fonctionnement susceptibles d'être embarquée ou mobile.

Il existe, à ce jour, des moteurs à explosion alimentés en gaz de pétrole liquéfié (GPL), utilisés dans l'industrie, dans des applications domestiques ou dans le domaine de l'automobile.

Le gaz utilisé pour ces moteurs est habituellement un mélange de gaz butane et de gaz propane. On rappelle que le butane et le propane commercialisés, ne sont pas des produits chimiquement purs mais des mélanges d'hydrocarbures répondant à des spécifications réglementaires. Ils sont classiquement utilisés pour la combustion.

Deux des caractéristiques qui différencient le butane et le propane, à la température ambiante, sont, la température d'ébullition, et la tension de vapeur ou de pression du gaz.

En effet, on rappelle que pour le butane, la température d'ébullition (c'est-à-dire lorsque le gaz est vaporisé hors de la bouteille de gaz) est d'environ 0 °C alors que pour le propane elle est d'environ -44 °C. Autrement dit, il faut une température supérieure à 0 °C pour obtenir un débit gazeux d'une bouteille de butane. Une bouteille de propane peut fonctionner jusqu'à -40 °C. C'est pourquoi, les bouteilles de butane sont surtout recommandées pour un usage intérieur.

On connait plus particulièrement l'utilisation des gaz de pétrole liquéfié (GPL) pour les moteurs automobiles. Le GPL, destiné à la carburation automobile, est un mélange spécial de butane et de propane défini par la norme NF EN 589. Les GPL ont la propriété d'être gazeux à la température ambiante et à la pression atmosphérique, mais ils se liquéfient dès qu'ils sont soumis à une pression relativement faible.

Le GPL est reconnu comme une énergie capable d'améliorer la qualité de l'air intérieur et extérieur et capable de réduire les émissions de gaz à effet de serre. En outre les moteurs fonctionnant au GPL sont moins bruyants que les moteurs à essence.

L'utilisation du propane comme carburant continue de progresser et essentiellement en tant que carburant pour les chariots de manutention. La fourniture du gaz propane peut se faire dans ce cas :
- soit en stations privatives destinées à l'approvisionnement de réservoirs fixés à demeure sur les chariots,
- soit en bouteilles.

Il est reconnu que l'empreinte carbone des gaz butane ou propane est plus faible que celle des autres carburants, ce qui permet de réduire les émissions de gaz à effet de serre (GES) allant jusqu'à 20 %, comparativement à l'essence par exemple.

Le propane est un carburant gazeux qui brûle sans laisser de résidu et qui peut être pressurisé et stocké sous forme liquide pour alimenter les voitures et les véhicules utilitaires légers. De façon générale, les véhicules alimentés au propane produisent des émissions plus propres c'est-à-dire moins de polluants.

Lorsqu'il est utilisé dans les véhicules, le propane est stocké sous pression moyenne dans des réservoirs qui régularisent le niveau de pression lorsque la température change soudainement.

Les avantages procurés par l'utilisation d'un gaz comme le gaz butane ou comme le gaz propane par rapport à l'essence et notamment leurs propriétés d'être moins polluant lors de leur combustion que d'autres énergies ainsi que de permettre la réalisation de moteurs à explosion beaucoup moins bruyant qu'un moteur à essence ou diesel; ont conduit le Déposant a chercher une solution pour utiliser de tels gaz en tant que source d'énergie pour des moteurs embarqués ou pouvant être utilisé dans des applications nomades comme par exemple la réalisation d'un groupe électrogène ou d'une motopompe ou toute autre machine à fonctionnement autonome.

On rappelle qu'un groupe électrogène est un dispositif comprenant un générateur électrique et un moteur à explosion pour entraîner le générateur de manière à ce que ce dernier produise un courant électrique monophasé ou triphasé à la tension et à la fréquence du réseau local. Les groupes existants ont un réservoir adapté pour contenir de l'essence afin d'alimenter le moteur.

On s'intéresse ici, plus particulièrement, aux moteurs à explosion alimentés en gaz propane mais aussi en gaz butane ou méthane ou biogaz pour des applications dans des appareils fixes ou mobiles telle que la réalisation d'un groupe électrogène qui nécessite de la mobilité et de l'autonomie, mais aussi à tout autre appareil nécessitant un entraînement mécanique autonome.

Compte tenu des inconvénients que présentent les moteurs existants vis-à-vis de l'environnement, et de la durée de leur autonomie, le Déposant a eu l'idée de mettre au point un moteur à explosion fonctionnant avec un gaz provenant d'une bouteille du commerce. De cette façon le Déposant a résolu le problème de la réalisation de moteurs non polluant et ayant une autonomie de fonctionnement de plusieurs heures.

Pour la mise au point de ce moteur, le Déposant a été confronté à plusieurs problèmes, d'une part le fait qu'il fallait respecter les normes en vigueur en Europe rappelées en annexe et plus particulièrement les normes NF EN12864 et plus particulièrement NF D 36-125 et NF 36-121 pour 45 cm3 et NFPM88-780 de 36 cm3 par exemple, concernant les raccords aux conduites de gaz et d'autre part, le fait qu'en utilisant directement la sortie de gaz après détente dans la sortie du détendeur d'une bouteille de gaz, la pression de sortie n'était pas compatible avec celle d'une chambre de combustion d'un moteur à explosion. Pour résoudre ces problèmes, le Déposant a conçu une interface de raccordement entre la bouteille de gaz et la chambre de combustion du moteur qui reçoit le gaz à une pression P1 correspondant à la pression de gaz de sortie du détendeur de la bouteille, et qui le délivre à une pression P2 de fonctionnement du moteur, ladite interface comprenant en outre des raccords normalisés conformes à la liste jointe.

Ainsi, tout en respectant les normes européennes en vigueur sur les gaz, le moteur proposé peut fonctionner avec du gaz propane ou avec d'autres gaz comme par exemple le gaz butane, méthane ou biogaz.

On préférera, par exemple, un moteur fonctionnant au gaz propane lorsque les conditions d'utilisations à l'extérieur seront plus contraignantes en température et en pression que ne le permet le gaz butane d'utilisation interdite en extérieur.

L'invention concerne également les appareils générateurs de courant tels que les groupes électrogènes, fixes ou mobiles, ou toutes autres applications fixes ou mobiles nécessitant une alimentation électrique autonome utilisant un tel moteur comme par exemple une motopompe.

Ainsi, le déposant propose un système moteur à explosion alimenté en gaz propane respectant les normes européennes en vigueur et plus particulièrement les normes mentionnées dans la liste annexée à la description et notamment les normes NF D-121 et NF D 36-125 et NFPM88-780. Les applications de ce système moteur à explosion sont en particulier, mais non exclusivement, la réalisation de groupes électrogènes à usage civil ou militaire et la réalisation de motopompes. Les motopompes sont classiquement utilisées par les pompiers en milieu rural, où l'approvisionnement en eau est difficile et où les sinistres en requièrent de grandes quantités.

A ce jour il n'existe pas de moteur à explosion en état de fonctionner dans des conditions réelles, susceptible d'être alimenté en gaz propane ou butane ou biogaz et qui réponde à la réglementation en vigueur en Europe pour les raccords et les pressions.

Il existe bien sûr, des moteurs pour véhicules qui fonctionnent avec un mélange butane propane. Cependant pour faire fonctionner ces moteurs à combustion interne, on rajoute au moteur à combustion, un ensemble adapté de carburation au GPL. En outre, le moteur possède nécessairement un réservoir pour stocker le gaz, qui doit être rempli dans des stations spécialisées.

En outre, les moteurs au GPL ne sont pas adaptés au problème qu'a cherché à résoudre le Déposant. En effet, non seulement, ces moteurs doivent avoir tout l'ensemble de carburation adapté au GPL, mais de plus, ils manquent d'autonomie vis-à-vis d'applications nomades telles que la réalisation d'un groupe électrogène ou celle d'une motopompe

Le Déposant a mis au point un système moteur à explosion alimenté en gaz ayant une autonomie de fonctionnement de plusieurs heures, silencieux, non polluant, et capable de fonctionner y compris en altitude dépassant 1500m. Avec le système moteur proposé, 1Kg de propane permet de fournir, en fonction de la puissance, 1KWatt/h pendant sept heures ou 6KWatt/h pendant une heure et demie.

Dans le cas d'une utilisation du système moteur comme motopompe, la consommation de propane est de 200g pour remonter en 1h, 60m³ d'eau de 8m de profondeur à 30m de hauteur, soit 1m³/mm.

Le Déposant a également mis au point un ensemble mobile à moteur à explosion fonctionnant au gaz pour des applications telles que les appareils générateurs de courant ou toute autre application nécessitant un entraînement mécanique autonome comme par exemple une motopompe et autres machines.

L'invention a plus particulièrement pour objet un système moteur à explosion à fonctionnement autonome alimenté en gaz comme du gaz butane ou du gaz propane ou du gaz méthane ou un biogaz, ledit système moteur comprenant : un moteur à explosion muni d'une chambre de combustion; au moins une bouteille de gaz et un détendeur connecté à ladite bouteille; caractérisé en ce qu'il comprend une interface de raccordement entre le détendeur et la chambre de combustion du moteur, ladite interface comportant :
- un dispositif d'injection comportant une première chambre munie d'une entrée E1 de gaz et l'arrivée du gaz à une pression P1 normalisée; une sortie S1 de gaz délivrant le gaz à ladite pression P1; ledit dispositif d'injection comportant un moyen de réglage de la pression pour le maintien à la pression P1,
- une vis de laminage connectée sur la sortie S1 du dispositif d'injection, permettant d'obtenir une pression P2,
- un premier tuyau de raccordement permettant d'amener le gaz de la sortie du détendeur à l'entrée du dispositif d'injection,
- un deuxième tuyau de raccordement permettant d'amener le gaz sortant du dispositif d'injection à l'entrée de la chambre de combustion, ledit tuyau permettant d'obtenir une détente du gaz à la pression P2 requise à l'entrée de la chambre de combustion du moteur, cette pression P2 étant la pression nécessaire pour le fonctionnement du moteur,
- un premier raccord R1 connecté à l'entrée E1 d'arrivée de gaz du dispositif d'injection, ledit raccord ayant un diamètre intérieur compatible avec l'entrée E1 et un diamètre extérieur compatible avec un embout B de connexion du premier tuyau,
- un deuxième raccord R2 connecté à la sortie S1 de gaz du dispositif d'injection après la vis de laminage, ledit raccord ayant un diamètre intérieur compatible avec la sortie S1 et un diamètre extérieur compatible avec un embout A de connexion du deuxième tuyau, les diamètres extérieurs des embouts A et B étant différents,
- un troisième raccord R1 identique au premier raccord, connecté à l'entrée E1 de la chambre de combustion.

Selon une autre caractéristique, le premier raccord (R1), le deuxième raccord (R2) et le troisième raccord (R1) sont des raccords aux normes pour le passage de gaz de combustion, le premier raccord R1 ayant un filetage extérieur G1/2 et un filetage intérieur F14x150, le deuxième raccord R2 ayant un filetage extérieur M20x150 et un filetage intérieur F14x150, et le troisième raccord (R2) ayant un filetage extérieur G1/2 et un filetage intérieur F14x150.

Ainsi, avantageusement, les raccords R1 (G1/2-F14x150) permettent un raccordement avec une entrée de diamètre F14x150. Les embouts B des tuyaux sont vissés sur le filetage extérieur des raccords R1. Le raccord R2 (M20x150- F14x150) permet un raccordement avec une sortie F14x150 et l'embout A du tuyau en sortie du dispositif d'injection est vissé sur le filetage extérieur du raccord R2.

Les pressions P1 et P2 sont des pressions normalisées.

Selon une autre caractéristique du système moteur à explosion à fonctionnement autonome, la première pression P1 correspond à la pression de sortie du détendeur de la bouteille de gaz. La deuxième pression P2 correspond à la pression de fonctionnement du moteur obtenue via la vis de laminage. Dans un exemple préféré de réalisation, la première pression est de 37 mbar pour du propane ou de 28 mbar pour du butane, et la deuxième pression est de 28 mbar ± 5 mbar.

Selon une autre caractéristique du système moteur à explosion à fonctionnement autonome, le moyen de réglage de la pression dans la première chambre du dispositif d'injection est disposé dans une cavité en dessous de la première chambre et une paroi de séparation de ladite cavité et de la première chambre, cette paroi de séparation étant renforcée en son centre par une membrane métallique, ledit moyen de réglage comportant un bouchon de réglage de hauteur prédéterminée et un ressort disposé dans un logement C du bouchon de réglage de manière à être pris entre le fond du logement C et la membrane métallique, de manière à permettre d'ajuster le volume et la pression de cette première chambre en vissant ou dévissant le bouchon et, à obtenir ainsi un réglage de la pression à la valeur P1.

Avantageusement, le gaz est de préférence du propane.

Pour rendre le système moteur à explosion mobile, ledit système comporte un chariot sur lequel sont placés la bouteille de gaz et le moteur avec l'interface de raccordement de la bouteille au moteur.

L'invention concerne également un générateur de courant comprenant un système moteur à explosion à fonctionnement autonome selon l'une quelconque des revendications précédentes.

L'invention concerne aussi une machine à entraînement mécanique autonome comprenant un système moteur à explosion à fonctionnement autonome selon l'une quelconque des revendications précédentes.

La machine à entraînement mécanique à fonctionnement autonome est par exemple une motopompe.

L'invention a également pour objet une interface de raccordement entre un détendeur connecté à une bouteille de gaz butane ou propane ou méthane ou biogaz et une chambre de combustion d'un moteur à explosion, ladite interface comportant :
- un dispositif d'injection comportant une première chambre munie d'une entrée E1 de gaz à une pression P1 normalisée; une sortie S1 de gaz délivrant le gaz à ladite pression P1; ledit dispositif d'injection comportant un moyen de réglage de la pression pour le maintien à la pression P1,
- une vis de laminage connectée sur la sortie S1 du dispositif d'injection, permettant d'obtenir une pression P2,
- un premier tuyau de raccordement permettant d'amener le gaz de la sortie du détendeur à l'entrée du dispositif d'injection
- un deuxième tuyau de raccordement permettant d'amener le gaz sortant du dispositif d'injection à l'entrée de la chambre de combustion, ledit tuyau permettant d'obtenir une détente du gaz à la pression P2 requise à l'entrée de la chambre de combustion du moteur, cette pression P2 étant la pression nécessaire pour le fonctionnement du moteur,
- un premier raccord R1 connecté à l'entrée E1 d'arrivée de gaz du dispositif d'injection, ledit raccord ayant un diamètre intérieur compatible avec l'entrée E1 et un diamètre extérieur compatible avec un embout B de connexion du premier tuyau,
- un deuxième raccord R2 connecté à la sortie S1 de gaz du dispositif d'injection après la vis de laminage, ledit raccord ayant un diamètre intérieur compatible avec la sortie S1 et un diamètre extérieur compatible avec un embout A de connexion du deuxième tuyau, les diamètres extérieurs des embouts A et B étant différents,
- un troisième raccord R1 identique au premier raccord, connecté à l'entrée E1 de la chambre de combustion.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1, représente le schéma d'un système moteur à explosion à fonctionnent autonome selon la présente invention ;
- la figure 2, représente le schéma d'un système moteur à explosion mobile à fonctionnement autonome;
- la figure 3, représente le schéma d'un dispositif d'injection selon une vue en perspective,
- la figure 4, représente le schéma du dispositif d'injection vu en coupe,

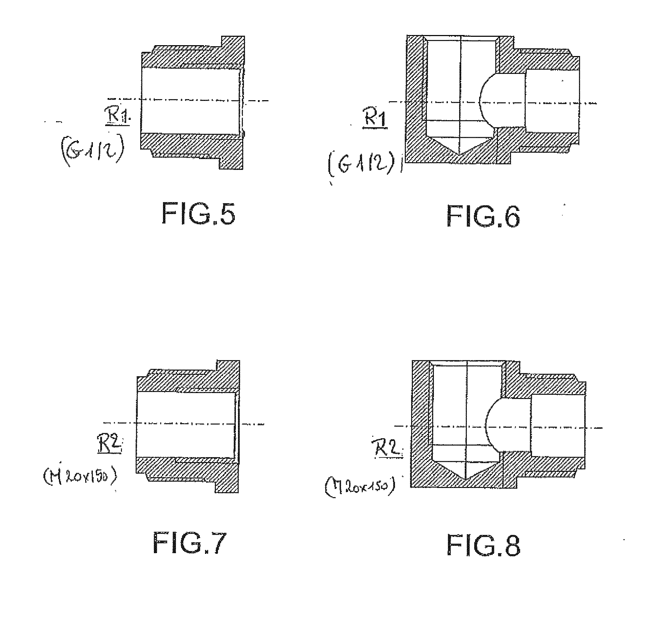

- les figures 5, 6 représentent le schéma d'un raccord R1 d'arrivée de gaz respectivement droit et coudé (sortie des tuyaux),
- la figure 7, 8 représentent le schéma d'un raccord R2 de départ de gaz pour un raccord droit et coudé (entrée de gaz dans les tuyaux),
- la figure 9 représente le schéma d'un mode de réalisation préféré pour le bouchon de réglage 106,
- La figure 10 représente les tuyaux 30 ou 31.

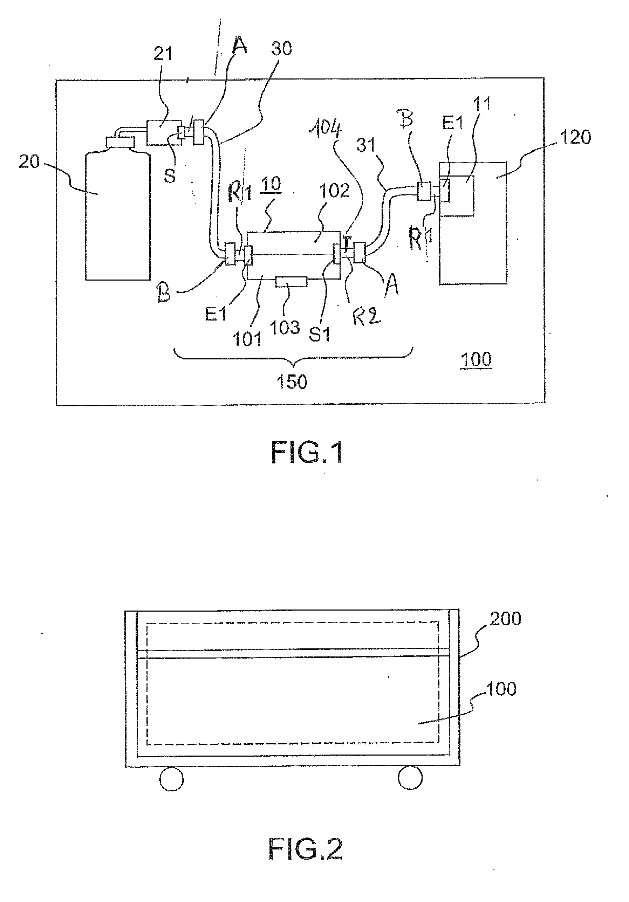

Le système moteur 100 décrit ci-après permet un fonctionnement avec du gaz propane ou du butane ou du méthane ou biogaz. Le système moteur répond en outre aux normes européennes. Ce système 100 est représenté en détail sur la figure 1.

Sur le schéma de la figure 2, le système 100 n'est pas détaillé. Cet exemple permet d'illustrer que le système 100 tel que représenté sur la figure 1, est placé sur un chariot 200 adapté aux dimensions de l'ensemble de manière à être maintenu et présenter ainsi de la mobilité. Avantageusement, le système moteur 100 forme ainsi un ensemble autonome en énergie transportable sur tout véhicule.

Le système moteur 100 peut être utilisé par exemple comme un groupe électrogène ou une motopompe.

Comme représenté sur la figure 1, le système moteur comporte un moteur 120 fonctionnant au gaz muni d'une chambre de combustion 11 ; une bouteille de gaz 20 à laquelle est raccordé un détendeur 21 et, une interface de raccordement 150 connectée entre la sortie S du détendeur 21 et l'entrée E1 de la chambre de combustion 11.

Cette interface de raccordement 150 permet de relier une bouteille de gaz de butane ou de propane ou de méthane ou encore un biogaz, munie de son détendeur, à la chambre de combustion d'un moteur à explosion et d'assurer un fonctionnement correct dudit moteur en lui fournissant le gaz à la pression requise tout en permettant de respecter notamment les normes de raccordement en vigueur en Europe.

Cette interface 150 comporte un tuyau de raccordement 30, un dispositif d'injection 10 et un tuyau de raccordement 31. Le tuyau de raccordement 30 est connecté entre la sortie S du détendeur 21 et l'entrée E1 du dispositif d'injection 10. Le tuyau de raccordement 31 est connecté à la sortie S2 du dispositif d'injection 10 et l'entrée E2 de la chambre de combustion 11 du moteur 101.

Chaque tuyau de raccordement 30 et 31 comporte un embout A d'arrivée de gaz c'est-à-dire une entrée de gaz, et un embout B de départ de gaz c'est-à-dire une sortie de gaz.

Pour le tuyau 30, l'embout d'arrivée A est relié à la sortie du détendeur 21. Cet embout A est constitué d'un écrou de diamètre M20x150 et l'embout de sortie B est constitué d'un écrou G ½ et est relié à l'entrée du dispositif d'injection au moyen du raccord R1.

Pour le tuyau de raccordement 31 l'embout d'arrivée A est relié après la vis de laminage 104, à la sortie S1 du dispositif d'injection au moyen du raccord R2. Cet embout A est constitué d'un écrou de diamètre M20x150 et l'embout de sortie B est constitué d'un écrou G ½. L'embout B est relié à l'entrée de la chambre de combustion au moyen du raccord R1.

Les raccords R2 sont des raccords normalisés M20x150-F14x150. Les raccords R1 sont des raccords normalisés G1/2-F14x150.

Par convention on désigne dans la suite les raccords R1, par raccord d'entrée de gaz (raccord connectés aux sorties des tuyaux d'arrivée de gaz) et, le raccord R2, par raccord de sortie de gaz (raccord connecté à l'entrée de gaz du tuyau 31).

Le dispositif d'injection 10 comporte une entrée de gaz E1, une sortie S1 munie de la vis de laminage 104, une première chambre 101 munie de l'entrée de gaz et une deuxième chambre 102 munie de la sortie de gaz. Ce dispositif d'injection 10 comporte également un dispositif de réglage 103 du volume de la première chambre pour ajuster le volume de cette première chambre et maintenir la pression à la valeur de la pression P1 de sortie du détendeur. Le gaz passe de la première chambre 101 à la deuxième chambre 102 par un système de clapet 115 classique non détaillé. Lorsque les pressions dans les deux chambres sont identiques, le système de clapet 115 est fermé. Lorsque la pression chute dans la deuxième chambre, le gaz étant aspiré par le moteur, le système de clapet 115 s'ouvre jusqu'à ce que l'équilibre des pressions entre la première et la deuxième chambre, soit rétabli. La pression dans la deuxième chambre est égale à la pression de la première chambre c'est-à-dire P1 et est maintenu par l'ouverture et la fermeture du système de clapet 115.

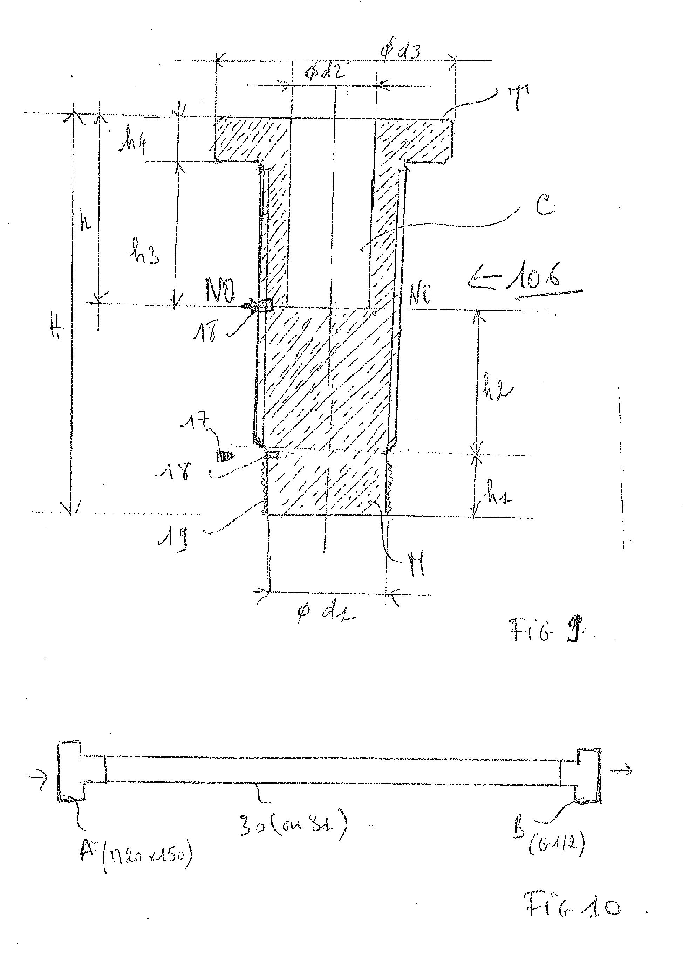

Le moyen de réglage 103 du volume de la première chambre est placé au dessous de cette première chambre 101. Ce moyen comporte un bouchon de réglage 106 de hauteur H prédéterminée permettant une course de 0 à au moins 7 mm ou de 0 à au moins 10 mm ou de 0 à au moins 15 mm selon la hauteur du bouchon choisie. De préférence on choisira un bouchon de hauteur 30 à 40 mm et de préférence de 35 mm, ce qui permettra un réglage pour des pressions d'entrées autres que 37 mbar ou 28 mbar. Ce bouchon 106 est accessible de l'extérieur par la partie M qui comporte un moletage 19 (partie facile à saisir pour visser et dévisser au moment du réglage). Le moyen de réglage comporte en outre un ressort 107 logé en partie dans le bouchon 106. Le ressort est plaqué contre la partie interne au fond du logement C du bouchon de diamètre d2 et de hauteur h égale à h3 plus h4 (figure 9), h4 étant la tête T située à l'intérieur d'une cavité 110. La cavité 110 est au dessous de la première chambre et séparée de ladite première chambre par la paroi de séparation 111. La paroi de séparation 111 est constituée d'une membrane métallique souple 15 et d'une pièce rigide 16 collée au dessous de la membrane contre laquelle vient en appui le ressort 107. La paroi de la cavité 110 est percée par un trou 12 de petit diamètre pour conserver la valeur de la pression atmosphérique sous la membrane pour l'équilibre du ressort 107.

La sortie S1 du dispositif d'injection 10 est reliée à l'entrée E1 de la chambre de combustion 11 du moteur au moyen du tuyau de raccordement 31. Le tuyau 31 a un diamètre normalisé et une longueur prédéterminée L qui permet d'avoir le gaz à la pression de fonctionnement du moteur. Cette pression est une pression de valeur P2 inférieure à la valeur de la pression P1 de sortie du détendeur et de sortie du dispositif d'injection 10. Cette pression P2 qui est la pression utile et nécessaire pour faire fonctionner le moteur est obtenue par le laminage de la sortie du gaz par la vis 104 placée sur ladite sortie S1.

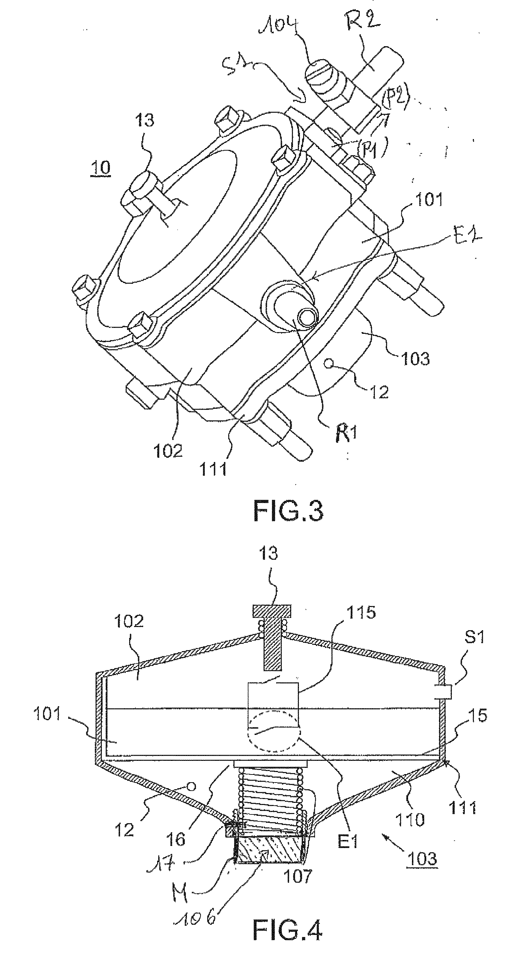

Le schéma de la figure 3 représente l'injecteur 10 vu en coupe transversale illustrant de manière plus détaillée les éléments qui le constituent. Parmi ces éléments on trouve de façon connue :
- deux chambres d'injection 101 et 102 formant respectivement l'une la chambre d'injection du gaz entrant et l'autre la chambre d'injection du gaz sortant.
- le système à clapet classique et non détaillé;

Ce système d'injection comporte en outre selon une caractéristique de l'invention, le moyen de réglage 103 constitué de la vis de réglage 106 et du ressort 107.

Le dispositif injecteur comporte dans sa partie inférieure 111 formant une cavité 110 en dessous de la première chambre 101, une paroi constituée d'une membrane souple 15 et d'une pièce rigide 16 collée à l'arrière de la membrane, et contre laquelle vient en appui le ressort 107 lorsque le bouchon 106 est vissé. Cette pièce rigide 16 est réalisée par exemple par une plaque métallique. La pièce 16 est apte à répartir les efforts exercés par le ressort 107 placé en dessous en appui contre la tête du bouchon de réglage 106 placé dans la cavité 110.

Dans les dispositifs d'injection du commerce la valeur du débit d'entrée est fixée par le constructeur et ne peut plus être modifiée. Cette valeur a été calculée pour une pression d'entrée de 28 ±5 mbar (non normalisée) qui ne correspond pas à l'application visée, ni à la norme européenne.

En effet, dans l'invention la pression P1 correspond à la pression de sortie du détendeur d'une bouteille de gaz, cette pression n'est pas égale à 28 ±5 mbar et est de 37 mbar ou de 28 mbar selon que le gaz est du propane ou du butane. La deuxième P2 est une pression normalisée qui est de 28 mbar ± 5 mbar. Le moyen de réglage 103 permet de rendre le dispositif injecteur compatible avec la pression d'entrée P1 imposée par les normes.

De façon pratique, le bouchon 106 de réglage de pression comporte une tête T de diamètre extérieur 26,5 mm. Le bouchon de réglage 106 a une hauteur H de 35 mm. La partie M, partie inférieure extérieure à la cavité 110 a une hauteur h1 de 9,5 mm, la partie cylindrique du bouchon comportant un filetage extérieur a un diamètre de 24 mm et une hauteur de 19,5 mm. Ce filetage permet de visser ou dévisser le bouchon afin de le monter à l'intérieur de la cavité 110 ou de le descendre et de régler ainsi la pression. Cette hauteur offre une course de 19,5mm et correspond à une hauteur h2 de vissage de 11 mm, plus une hauteur h3 de 9,5mm. Le ressort 107 a diamètre de 19mm, une longueur Lg de 47,40mm et un diamètre du fil le constituant de 1,12 mm. Ce ressort 107 est logé dans le trou C ménagé dans le bouchon de réglage 106 de diamètre 19.40mm et de profondeur 14.5 mm. Le ressort 107 vient en butée contre la plaque de métal 16 en sa partie supérieure. La course du bouchon de réglage aura après réglage de la pression, une position fixée par une vis-pointeau 17 logée dans un trou 18 adapté. Plusieurs trous de réception pour vis pointeau peuvent être prévus le long du filetage du bouchon 106. La vis- pointeau 17 est de type standard en inox de diamètre 3 mm, cette vis 17 vient fixer la position du bouchon en fonction de la pression recherchée: 37 mb ou 28 mb. Le bouchon de réglage réalisé selon cet exemple pratique permet en outre d'avoir une sécurité contre toute éventuelle substitution. En effet, le bouchon de réglage 106 et le ressort sont montés dans le dispositif d'injection avant fixation de la partie inférieure 111 à la partie supérieure comportant les deux chambres 101 et 102.

Pour la pré-définition du réglage de la pression, la valeur 37 mb, sera obtenue par le positionnement du bouchon 106 repéré par le niveau N0 sur les figures 4 et 9.

Pour la valeur 28 mb, en remontant ce bouchon à l'intérieur de la cavité 110 figure 4 ou 9, un trou de réception d'une vis pointeau apparaissant sur la surface filetée de ce bouchon indiquera le positionnement du réglage. Il est prévu également de lire les différentes valeurs de pression par marquage sur l'extérieur du bouchon (cylindrique)

Pour une bonne manipulation de ce bouchon, le bouchon 106 comporte un "moletage" sur l'extrémité M, de hauteur h1 de 9.5mm et de diamètre 22.5mm.

Le bouchon de réglage proposé permet un réglage adaptable à toute pression de fonctionnement de moteurs. Ce bouchon 106 offre des possibilités de réglage permettant ainsi de convenir à des moteurs répondant à des normes autres que celles qui sont applicables en Europe.

Afin de répondre aux normes de sécurité, le bouchon de réglage 106 est en bronze.

A titre d'exemple, la hauteur de compression totale du ressort est 8.70mm. La hauteur du logement h depuis la base de logement correspondant par convention au niveau "0" (référence N0), jusqu'au fond d'appui, soit la membrane métallique 15, est de 29.2mm.

Ainsi, avantageusement, la hauteur de la course (du réglage) à effectuer peut être indiquée (sur une étiquette par exemple) pour chaque pression imposée (37 mbar, 28 mbar). Les valeurs du réglage seront préalablement déterminées.

Dans la réalisation pratique, quelque soient les pressions conformes à la norme NFEN12864, les longueurs des tuyaux 30 et 31 sont normalisées. La longueur du tuyau 30 est indifférente. Seule la longueur du tuyau 31, normalisée, intervient pour un fonctionnement correct du moteur : pour la norme NF D 36-125 ou NF D-36-121, le tuyau 31 doit présenter un volume interne de 45cm3, et pour la norme NF PM 886780, ce volume doit être de 36 cm3. Le diamètre étant fixe, les longueurs des tuyaux 31 seront différentes, pour offrir le volume requis en correspondance avec les réalisations conçues par différents producteurs, mais tout en restant conformes à la norme NF EN 12864.

Les embouts A et B des tuyaux sont des écrous permettant des raccords de gaz normalisés comme précisé précédemment.

### ANNEXE

**Normes en vigueur**

| | |
|---|---|
| NF EN 14800 Novembre 2007 | Tuyaux flexibles métalliques onduleux de sécurité pour le raccordement d'appareils à usage domestique utilisant des gaz combustibles |
| NF D 36-121 (avril 2009) | Raccords d'extrémité avec joint d'étanchéité pour tuyaux flexibles métalliques onduleux pour le raccordement externe des appareils à usage domestique utilisant les combustibles gazeux distribués par réseaux |
| NF D 36-121/ A1) (décembre 2011) | Raccords d'extrémité avec joint d'étanchéité pour tuyaux flexibles métalliques onduleux pour le raccordement externe des appareils à usage domestique utilisant les combustibles gazeux distribués par réseaux |
| NF D 36-123 (juin 2001) | Tuyaux flexibles métalliques onduleux, autres que les tuyaux flexibles relevant des normes NF D 36-121 et NF D 36-125, pour le raccordement externe des appareils utilisant les combustibles gazeux |
| NF D 36-125 (avril 2009) | Raccords d'extrémité avec joint d'étanchéité pour tuyaux flexibles métalliques onduleux pour le raccordement externe des appareils à usage domestique utilisant le butane et le propane distribués par récipients |
| NF D 36-125/ A1 (décembre 2011) | Raccords d'extrémité avec joint d'étanchéité pour tuyaux flexibles métalliques onduleux pour le raccordement externe des appareils à usage domestique utilisant le butane et le propane distribués par récipients |
| NF EN 1286 (4 avril 2002) | Détendeurs à réglage fixe, à pression de détente maximale inférieure ou égale à 200 mbar, de débit inférieur ou égal à 4 kg/ h et leurs dispositifs de sécurité associés pour butane, propane ou leurs mélanges |
| NF EN 12864/ A1 (mai 2004) | Détendeurs à réglage fixe, à pression de détente maximale inférieure ou égale à 200 mbar, de débit inférieur ou égal à 4 kg/ h et leurs dispositifs de sécurité associés pour butane, propane ou leurs mélanges |
| NF EN 12864/ A2 (décembre 2005) | Détendeurs à réglage fixe, à pression de détente maximale inférieure ou égale à 200 mbar, de débit inférieur ou égal à 4 kg/ h et leurs dispositifs de sécurité associés pour butane, propane ou leurs mélanges |
| NF EN 12864/ A3 (novembre 2009) | Détendeurs à réglage fixe, à pression de détente maximale inférieure ou égale à 200 mbar, de débit inférieur ou égal à 4 kg/ h et leurs dispositifs de sécurité associés pour butane, propane ou leurs mélanges |
| NF EN 13785 (novembre 2005) | Détendeurs de débit inférieur ou égal à 100 kg/ h, à pression de détente nominale maximale inférieure ou égale à 4 bar, autres que les détendeurs relevant de l'EN 12864, et leurs dispositifs de sécurité associés pour butane, propane ou leurs mélanges |
| NF EN 13785/ A1 (décembre 2008) | Détendeurs de débit inférieur ou égal à 100 kg/ h, à pression de détente nominale maximale inférieure ou égale à 4 bar, autres que les détendeurs relevant de l'EN 12864, et leurs dispositifs de sécurité associés pour butane, propane ou leurs mélanges |
| XP M 88-780 (Juillet 2003) | Installations d'hydrocarbures liquéfiés en récipients - Tuyaux flexibles métalliques onduleux GPL pour phase gazeuse à usage domestique utilisés à haute pression |
| NF M 40-001 | Caractéristiques du butane commercial |
| NF M 40-002 | Caractéristiques du propane commercial |

## Revendications

1. Système moteur à explosion (100) à fonctionnent autonome alimenté en gaz comme du gaz butane ou du gaz propane ou du gaz méthane ou un biogaz, ledit système moteur comprenant : un moteur à explosion (120) muni d'une chambre de combustion (11); au moins une bouteille de gaz (20) et un détendeur (21) connecté à la bouteille; **caractérisé en ce qu'**il comprend une interface de raccordement (150) entre le détendeur (21) et la chambre de combustion (11) du moteur, ladite interface (150) comportant :
- un dispositif d'injection comportant une première chambre munie d'une entrée E1 de gaz à une pression normalisée P1; une sortie S1 de gaz délivrant le gaz à ladite pression P1; ledit dispositif d'injection comportant un moyen de réglage de la pression pour le maintien à la pression P1,
- une vis de laminage (104) connectée sur la sortie S1 du dispositif d'injection, permettant d'obtenir une pression P2,
- un premier tuyau de raccordement permettant d'amener le gaz de la sortie du détendeur à l'entrée E1 du dispositif d'injection à la pression P1 normalisée,
- un deuxième tuyau de raccordement permettant d'amener le gaz sortant du dispositif d'injection à l'entrée de la chambre de combustion, ledit tuyau permettant d'obtenir une détente du gaz à une pression P2 requise à l'entrée de la chambre de combustion du moteur, cette pression P2 étant la pression nécessaire pour le fonctionnement du moteur,
- un premier raccord R1 connecté à l'entrée E1 d'arrivée de gaz du dispositif d'injection, ledit raccord ayant un diamètre intérieur compatible avec l'entrée E1 et un diamètre extérieur compatible avec un embout B de connexion du premier tuyau,
- un deuxième raccord R2 connecté à la sortie S1 de gaz du dispositif d'injection après la vis de laminage (104), ledit raccord ayant un diamètre intérieur compatible avec la sortie S1 et un diamètre extérieur compatible avec un embout A de connexion du deuxième tuyau, les diamètres extérieurs des embouts A et B étant différents,
- un troisième raccord R1 identique au premier raccord, connecté à l'entrée E1 de la chambre de combustion.

2. Système moteur à explosion à fonctionnement autonome selon la revendication 1, **caractérisé en ce que** le premier raccord (R1), le deuxième raccord (R2) et le troisième raccord (R1) sont des raccords aux normes pour le passage de gaz de combustion, le premier raccord (R1) ayant un filetage extérieur G1/2 et un filetage intérieur F14x150, le deuxième raccord (R2) ayant un filetage extérieur M20x150 et un filetage intérieur F14x150, et le troisième raccord (R1) ayant un filetage extérieur G1/2 et un filetage intérieur F14x150.

3. Système moteur à explosion à fonctionnement autonome selon la revendication 1 ou 2, **caractérisé en ce que** la première pression P1 correspond à la pression de sortie du détendeur de la bouteille de gaz, et la deuxième pression P2 correspondant à la pression de fonctionnement du moteur obtenue via la vis de laminage (104), ladite pression étant la pression de sortie du tuyau de raccordement (31) raccordé via le troisième raccord à l'entrée de la chambre de combustion (11).

4. Système moteur à explosion à fonctionnement autonome selon la revendication 3, **caractérisé en ce que** la première pression P1 est une pression normalisée de 37 mbar pour du propane ou de 28 mbar pour du butane, et la deuxième pression P2 est une pression normalisée qui est de 28 mbar ± 5 mbar.

5. Système moteur à explosion à fonctionnement autonome selon l'une quelconque des revendications précédentes, **caractérisé en ce que** le moyen de réglage (103) de la pression dans la première chambre du dispositif d'injection est disposé dans une cavité (110) en dessous de la première chambre (101) et une paroi de séparation (15) de ladite cavité et de la première chambre, cette paroi de séparation (15) étant renforcée en son centre par une membrane métallique (16), ledit moyen de réglage comportant un bouchon de réglage (106) de hauteur prédéterminée et un ressort (107) disposé dans un logement C du bouchon de réglage de manière à être pris entre le fond du logement C et la membrane métallique (16), de manière à permettre d'ajuster le volume et la pression de cette première chambre (101) en vissant ou dévissant le bouchon et, à obtenir ainsi un réglage de la pression à la valeur P1.

6. Système moteur à explosion à fonctionnement autonome selon l'une quelconque des revendications précédentes, **caractérisé en ce qu'**il comporte un chariot sur lequel sont placés la bouteille de gaz, le moteur et l'interface de raccordement, rendant le système moteur mobile.

7. Générateur de courant comprenant un système moteur à explosion à fonctionnement autonome selon l'une quelconque des revendications précédentes.

8. Machine à entraînement mécanique autonome comprenant un système moteur à explosion à fonctionnement autonome selon l'une quelconque des revendications précédentes.

9. Motopompe comprenant un système moteur à explosion à fonctionnement autonome selon l'une quelconque des revendications précédentes.

10. Interface de raccordement entre un détendeur connecté à une bouteille de gaz butane ou propane ou méthane ou biogaz et une chambre de combustion d'un moteur à explosion **caractérisé en ce que** ladite interface comporte:
- un dispositif d'injection comportant une première chambre munie d'une entrée E1 de gaz à une pression normalisée; une sortie S1 de gaz délivrant le gaz à ladite pression P1; ledit dispositif d'injection comportant un moyen de réglage de la pression pour le maintien à la pression P1,
- une vis de laminage (104) connectée sur la sortie S1 du dispositif d'injection, permettant d'obtenir une pression P2,
- un premier tuyau (30) de raccordement permettant d'amener le gaz de la sortie du détendeur à l'entrée du dispositif d'injection à la pression P1 normalisée,
- un deuxième tuyau (31) de raccordement permettant d'amener le gaz sortant du dispositif d'injection à l'entrée de la chambre de combustion (11), ledit tuyau (31) permettant d'obtenir une détente du gaz à une pression P2 requise à l'entrée de la chambre de combustion (11) du moteur, cette pression P2 étant la pression nécessaire pour le fonctionnement du moteur,
- un premier raccord R1 connecté à l'entrée E1 d'arrivée de gaz du dispositif d'injection, ledit raccord ayant un diamètre intérieur compatible avec l'entrée E1 et un diamètre extérieur compatible avec un embout B de connexion du premier tuyau,
- un deuxième raccord R2 connecté à la sortie S1 de gaz du dispositif d'injection après la vis de laminage (104), ledit raccord ayant un diamètre intérieur compatible avec la sortie S1 et un diamètre extérieur compatible avec un embout A de connexion du deuxième tuyau, les diamètres extérieurs des embouts A et B étant différents,
- un troisième raccord R1 identique au premier raccord, connecté à l'entrée E1 de la chambre de combustion.
